Europäisches Patentamt

(19) European Patent Office

Office européen des brevets

(11) Publication number: **0 117 158**
A1

## EUROPEAN PATENT APPLICATION

(21) Application number: 84301153.7

(22) Date of filing: 22.02.84

(51) Int. Cl.³: **G 11 B 21/06**

(30) Priority: 22.02.83 US 468135

(43) Date of publication of application:
29.08.84 Bulletin 84/35

(84) Designated Contracting States:
DE FR IT NL

(71) Applicant: HI-TECH PERIPHERALS CORPORATION
7271 Garden Grove Boulevard Suite A
Garden Grove California(US)

(72) Inventor: Szeto, Wai S.
4 Caraway
Irvine California, 92714(US)

(72) Inventor: Fok, Raymond (NMI)
5327 Sunmist Drive Rancho Palos Verdes
California, 90274(US)

(74) Representative: Mayes, Stuart David et al,
BOULT, WADE & TENNANT 27 Furnival Street
London, EC4A 1PQ(GB)

(54) Disc drive carriage slide assembly.

(57) A flexible disc drive carriage slide assembly (52) is described which allow a transducer head supporting carriage (57) to move relative to the disc drive mainframe (50). The carriage slide assembly comprises a movable member (56) mounted to the carriage and a fixed member (54) mounted to the mainframe. A plurality of roller bearings (122) are retained within the slide assembly between the movable and fixed members in a manner to allow the movable member to move relative to the fixed member while providing a tight coupling therebetween. The slide assembly is designed such that its orientation with respect to the carriage element can be varied, orientation selection being determined by space and the disc drive manufacturing considerations. The fixed member may be formed as part of the mainframe to further reduce system costs.

FIG.3.

1.

DISC DRIVE CARRIAGE SLIDE ASSEMBLY

The present invention relates to floppy disc drives, and more particularly, to a floppy disc drive which incorporates a novel carriage slide assembly for providing relative movement between a carriage and a fixed member associated with the disc drive mainframe.

"Floppy" disc information storage systems currently available typically utilize a thin pliant disc element contained within a cover jacket with low-cost accessing, transducing and control systems. The transducer structure comprises a single (or double) channel head mounted in a transducer, the transducer itself being mounted in a carriage that is accessed to different circumferential tracks on the floppy disc by a microprocessor-based control system.

The carriage/head assembly is mounted on a pair of spaced steel rods attached to the mainframe to allow the carriage to slide in a linear direction, the carriage being incrementally positioned by a metal band actuator (or a lead screw). The bearing surface, typically made of plastic, is provided by the carriage itself, the steel rods directly contacting the inner surface of the portion of the carriage through which it passes. Normally a tight fit is desired between the two contacting surfaces to provide for accurate accessing of the desired circumferential track. However, the tight fit increases the friction between the two contacting parts, thus reducing access speeds and causing hysteresis effects. The hysteresis effect causes the head to be accessed to two different track positions although the same access signal is applied, at different time periods, to a stepper motor. The difference between the two positions is known as the "spread." If one attempts to minimize the spread by loosening the coupling between the two surfaces, carriage wobble and vibration, with the associated positioning inaccuracies and noise, are likely to result.

The two carriage rods, it should be noted, must be spaced apart a predetermined distance to minimize the carriage tilt movement, thus limiting the amount of space left on the mainframe. The disc drive designer is thus constrained to a certain degree from reducing the size of the drive system, at least with respect to the principle plane dimensions, by the rod spacing.

The orientation of the disc element determines the orientation of the carriage element and thus the orientation of the carriage rods. This factor also limits the flexibility of system design both from the standpoint of component placement and system size reduction.

What is desired, therefore, is to provide an improved disc drive system slide assembly wherein the carriage is movable in a manner wherein the friction between the carriage and the fixed support member is substantially reduced while maintaining the necessary tight coupling for accurate positioning capabilities. It is also desired that the slide assembly have the capability of being mounted to the carriage in various orientations, thus allowing further reductions in system size and for optimization of the disc drive manufacturing and assembling operations.

The present invention provides an improved disc drive carriage slide assembly which allows a transducer head supporting carriage to move relative to a disc drive mainframe. The carriage slide assembly provides a first, or movable, member, coupled to the carriage, and a second, or fixed member, mounted to the mainframe. A plurality of precision roller bearings are retained within the slide assembly between the movable and fixed members in a manner to allow the movable member to move relative to the fixed member in a linear manner while maintaining a tight coupling therebetween. The slide assembly is designed such that its orientation with respect to the carriage element can be varied, orientation selection being determined by space and manufacturing considerations. The fixed member of the slide assembly may be formed as part of the disc drive mainframe to reduce system costs.

The carriage slide assembly as described substantially reduces the friction encountered as the carriage is accessed to a selected circumferential track on the disc while maintaining the tight coupling required for accurate positioning. Since the slide interaction surfaces are within a limited, closely spaced area, the width of the carriage can be reduced. Further the assembly can be located at various orientations with respect to the carriage. Both features allow the disc drive to be reduced in size since component placement in the disc drive mainframe can be more compact. Further, locating the fixed portion of the assembly in the mainframe substantially reduces the cost of disc drive manufacturing since the fixed portion is produced as an integral part of the mainframe, the cost of manufacture that would otherwise have been necessary to produce the separate component thus being eliminated.

Embodiments of the invention will now be described by way of example, with reference to the drawings,

FIG. 1 is a partial plane view of a prior art disc drive system;

FIG. 2 is a sectional view along line 2-2 of FIG. 1;

FIG. 3 is a partial plane view of a disc drive system according to the present invention using a metal band actuator to drive the carriage;

FIG. 4 is a bottom view of FIG. 3;

FIG. 5 is a partial plane view of a disc drive system according to the present invention using a lead screw to drive the darriage;

FIG. 6 is a view along line 6-6 of FIG. 5;

FIG. 7 is a sectional view along line 7-7 of FIG. 6;

FIG. 8 is a sectional view along line 8-8 of FIG. 5;

FIG. 9 is a partial sectional view along line 9-9 of FIG. 7;

FIG. 10 is a more detailed view of the circled portion shown in FIG. 8;

FIGS. 11, 12 and 13 illustrate the carriage slide assembly positioned in various orientations with respect to the carriage element;

FIG. 14 illustrates a modification to the roller bearing slide assembly;

FIG. 15 illustrates a roller bearing slide assembly having the fixed portion formed integral with the disc drive mainframe; and

FIGS. 16 and 17 illustrate the prior art hysteresis effect which has been substantially eliminated by the present arrangement.

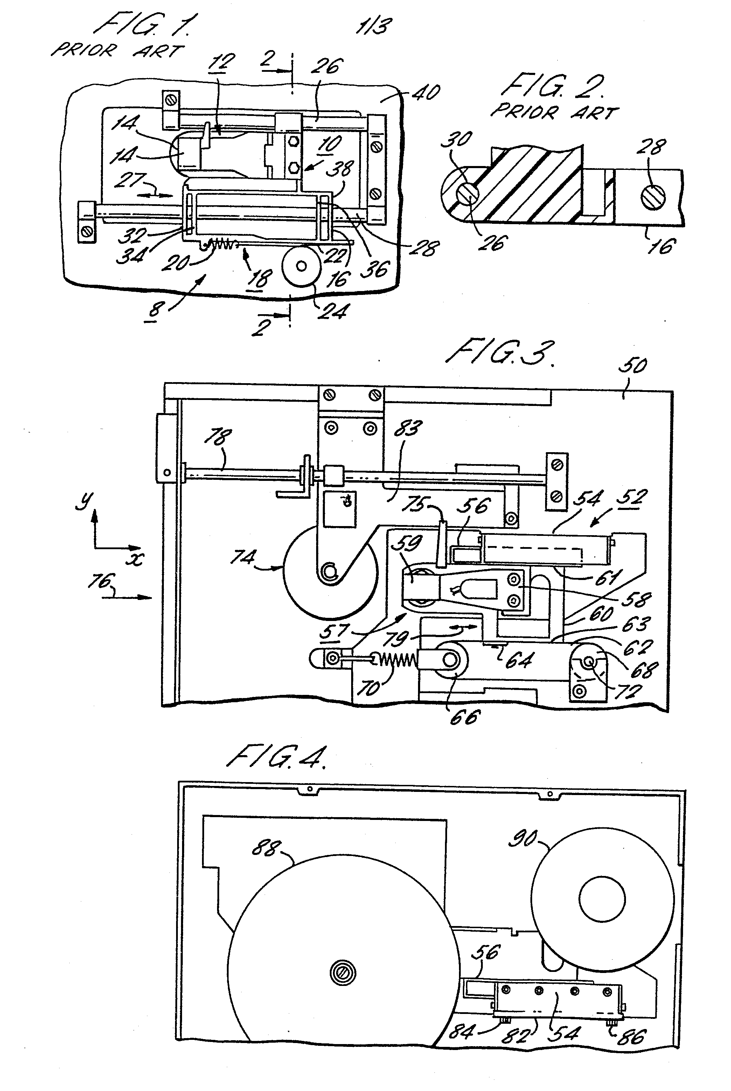

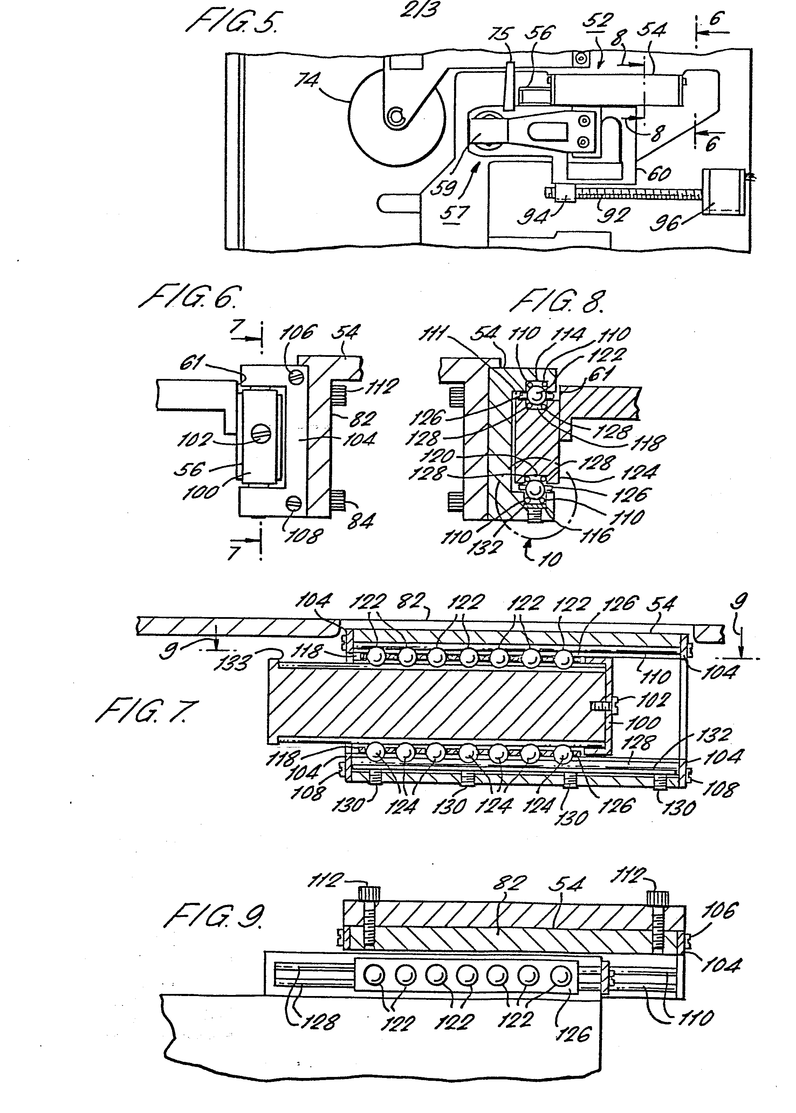

Referring now to Figures 1 and 2, a typical prior art disc drive carriage slide assembly 8 is illustrated. Manufacturers of disc drive systems incorporating illustrated slide assembly 8 include, for example, Shugart Associates,

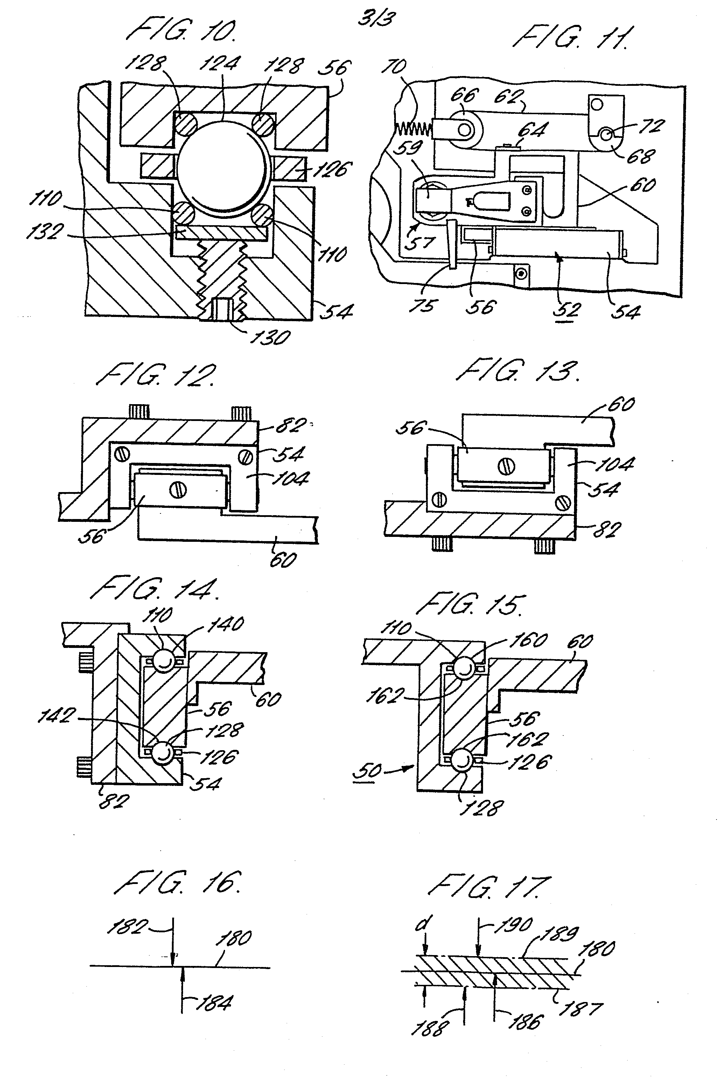

FIG. 5 is a partial plane view of a disc drive system according to the present invention using a lead screw to drive the carriage;

FIG. 6 is a view along line 6-6 of FIG. 5;

FIG. 7 is a sectional view along line 7-7 of FIG. 6;

FIG. 8 is a sectional view along line 8-8 of FIG. 5;

FIG. 9 is a partial sectional view along line 9-9 of FIG. 7;

FIG. 10 is a more detailed view of the circled portion shown in FIG. 8;

FIGS. 11, 12, and 13 illustrate the carriage slide assembly positioned in various orientation with respect to the carriage element;

FIG. 14 illustrates a modification to the roller bearing slide assembly;

FIG. 15 illustrates a roller bearing slide assembly having the fixed portion formed integral with the disc drive mainframe; and

FIGS. 16 and 17 illustrate the prior art hysteresis effect which has been substantially eliminated by the present arrangement.

Referring now to Figures 1 and 2, a typical prior art disc drive carriage slide assembly 8 is illustrated. Manufacturers of disc drive systems incorporating illustrated slide assembly 8 include, for example, Shugart Associates, Sunnyvale, California; Tandon Corporation, Chatsworth, California; and Mitsuishi Corporation, Tokyo, Japan. Slide assembly 8 includes a carriage 10 and a transducer assembly 12 mounted thereon. A magnetic head 14 is mounted to the transducer assembly 12 as illustrated. Although only one magnetic head 14 is illustrated, a second magnetic head oppositely disposed to head 14 can be provided to increase the storage capacity of the system. Carriage 10 includes portion 16 which is coupled to a metal band actuator system 18 which comprises bias spring 20, cable 22 affixed to carriage portion 16 and cable drum 24. The construction and operation of metal band actuator systems have been widely described in the prior art and thus will not be set forth in detail herein. Two parallel steel rods 26 and 28 are provided to allow the carriage 10 to move in a linear manner in the direction of arrows 27. As illustrated, the length of rod 26 is less than the length of rod 28, although equal length rods could also be utilized. Carriage 10, preferably made of plastic material, has an inner surface 30 which provides a bearing surface between the carriage 10 and rod 26. The inner surfaces of support members 32, 34, 36, and 38 of slide portion 16 also provide bearing surfaces between carriage 10 and rod 28. Although not illustrated in Figures 1 and 2, the rods 26 and 28 are supported above the surface of the system mainframe 40 of disc drive system 8 to allow for linear movement of the carriage 10 without interference. It should be noted that the rods 26 and 28 are required to be spaced apart a predetermined distance in order to eliminate a tilt movement which would occur otherwise. The required distance between rods 26 and 28 necessarily limits the space available on the surface of mainframe 40 for placement of other components which comprise the disc drive system.

In operation, a controller (not shown) generates
appropriate control signals such that the head 14 is accessed
to a preselected circumferential track on the disc 42. In
particular, the signal drives a stepper motor (not shown)
which is directly coupled to drum 24. Rotation of the drum
causes cable 22 wrapped thereon to position carriage 10 (via
portion 16) such that head 14 is properly accessed, carriage
10 sliding on rods 26 and 28.

Figure 3 shows a plan view of the carriage slide
assembly of the present invention. In order to place the
present invention in better perspective, definitions of some
of the terms utilized hereinafter are now set forth. In particular, the term "mainframe" as utilized hereinafter is intended to signify the main casting made to house the disc
drive system components and is referred to by reference numeral
50. The various components which make up the disc drive system
of the present invention are generally secured to the mainframe
50 directly or through various intermediate components. The
phrase "principal plane dimensions" as used hereinafter refers
to the dimensions in the X, Y direction as shown in Figure
3 and, as will be set forth hereinafter, is utilized in the
context of the present invention to illustrate that the disclosed slide assembly allows the principal plane dimensions
to be reduced, thus reducing the overall size of the disc
drive system. It should be noted that the same reference
numerals utilized in each of the figures identify identical
components.

The disc drive system of the present invention is similar to the prior art device shown in Figures 1 and 2 with the exception that the carriage slide assembly 8, which in essence comprises two separate, spaced apart interaction surfaces (rods 26 and 28) is replaced by a carriage slide assembly 52 having slide interaction surfaces within a limited, closely spaced area. The carriage slide assembly 52, discussed in more detail hereinafter with reference to Figures 6-10, comprises a fixed member 54 and a movable member 56. A carriage 57 supports transducer assembly 58 having a magnetic head 59 mounted therein. As with the prior art disc drive systems, a second magnetic head positioned adjacent the opposite disc surface can be provided. A portion 60 of carriage 57 is coupled on side 61 to the movable member 56 and on side 63 to a metal band actuator 62 via fastener 64. Cable 62 is formed about pulleys 66 and 68, pulley 66 being maintained in tension by spring 70 and pulley 68 being driven by the shaft 72 of a stepper motor (not shown). A member 74 for centering the floppy disc when it is inserted into the disc drive system is provided as illustrated. When the disc is inserted into the disc drive in the direction of arrow 76, member 74 pivots about rod 78 in order to center and hold the disc in proper position. Head 58, normally positioned away from the plane of the disc, is pivoted into contact with the disc surface at the same time the centering member 74 is rotated into position. Finger, or control tab 75, is engageable by a solenoid operated element (not shown) or by an element related to the clutch assembly to permit automatic pivoting of transducer 58 from the disc or to release the transducer 58 to permit engagement or (landing) of the magnetic head 59 on the flexible disc. Engagement of the finger 75 also causes the centering member 74 to be similarly engaged via the coupling between finger 75 and the finger support arm 83.

In operation, after the flexible disc is inserted into the disc drive system, a controller applies appropriate control signals to the stepper motor, rotating shaft 72 a predetermined amount such that band 72 drives the carriage 57 an appropriate distance. In particular, head 58 is accessed to a preselected circumferential track by carriage 57 sliding in the linear direction (arrows 79) by virtue of the novel carriage slide assembly 52 of the present invention.

Figure 4 is a bottom view of Figure 3 and shows fixed member 54 of the carriage slide assembly 52 affixed to a support member 82 extending from mainframe 50 via screws 84 and 86. Also shown in the figure is disc drive motor 88 and stepper motor 90.

Figure 5 illustrates an alternate carriage drive mechanism which can be utilized in the present invention. In particular, a lead screw 92 has a movable nut 94 formed thereon, nut 94 being joined to carriage portion 60 as illustrated. The direct drive motor 96 is coupled to lead screw 92. Energization of motor 96 rotates lead screw 92, causing nut 94 to move along the lead screw 92 and thus moving the carriage 57 to a predetermined position such that head 59 accesses the desired circumferential track on the disc.

Figure 6 is a partial sectional view along line 6-6 of Figure 5 and shows the external end details of the novel carrage slide assembly 52 of the present invention.

Side 61 of carriage portion 60 is secured to movable member 56 as shown, member 56 being slideably coupled to fixed member 54 by a precision roller bearing arrangement shown in more detail in Figures 7-10. A carriage slide end cap 100 for limiting the movement of member 56 is affixed to one end of the member 56 via screw 102. Two slide end plates 104 (only one shown in Figure 6) affixed to member 54 at each end via end plate retaining screws 106 and 108, maintain the roller bearing guide rods 110 (Figure 8) associated with fixed member 54 in place. As illustrated, member 54 is affixed to member 82 extending from the surface of mainframe 50 via screws 84 and 112.

The details of the novel carriage slide assembly 52 of the present invention are now described with reference to Figures 7-10.

Fixed member 54 is shaped (C-shape in the embodiment illustrated) such that a channel 111 is provided to allow movable portion 56 to slide therein. Channels, or passageways, 114 and 116 are formed along the length of member 54 and channels, or passageways, 118 and 120 are formed along the length of movable member 56. Channels 114 and 116 are spaced from and coextensive with channels 118 and 120, respectively. A plurality of roller, or ball, bearings 122 are arranged between channels 114 and 118 and a plurality of roller bearings 124 are arranged between the channels 116 and 124 as shown. It should be noted that although only seven roller bearings are illustrated in each arrangement, either more or less can be utilized. The roller bearings are spaced from one another, in each arrangement, and held in position by an apertured spacer member 126. Two guide rods 110 are positioned in each of the channels 114 and 116, guide rods 110 being fixed in position by end plates 104. Two guide rods 128 are positioned in each of the channels 118 and 120 and secured along the surface of movable member 56 between plate 100 and lip 133 of member 56. A plurality of bearing adjustment screws 130 are provided to allow a movable pressure plate 132 positioned within channel 116 to be adjusted whereby the overall friction level between the movable member 54 and fixed member 56 can be adjusted as desired.

As set forth hereinabove, rods 110 are fixed to the fixed member 54 via end plates 104 whereas rods 128 are fixed to the movable member 56 by end plate 100 in a manner such that guide rods 128 move with the movable member 56. Guide rods 128 thus slide over the roller bearings 110 and 124 to provide reduced frictional coupling between fixed member 54 and movable member 56 as the carriage 57, and thus head 58, is accessed to its desired position.

Figure 10 shows more detail of the circled portion of the carriage slide assembly of Figure 8. The bearing adjustment screws 130 act upon the pressure plate 132 in a manner such that roller bearings 124 can be moved either closer or further away from the movable member 56, thereby adjusting the frictional contact between the fixed member 54 and movable member 56.

Figure 11 is identical to the disc drive system shown in Figure 3 with the exception that the novel carriage slide assembly 52 of the present invention is shown in a different orientation. In particular, carriage slide assembly 52 been positioned on the opposite side of carriage portion 60 (as viewed in the figure, on the bottom of the carriage portion 60) in contrast to its position shown in Figure 3 (as viewed in the figure on the top of carriage portion 60).

Figure 12 shows a third orientation of the carriage slide assembly 52 of the present invention wherein the assembly is positioned with the fixed member 54 above the carriage portion 60. Figure 13 shows a fourth orientation of the carriage slide asembly 52 with the fixed member 54 positioned below the carriage portion 60. Although only four orientations have been disclosed, other orientations can be provided. The possible variations in orientation of the carriage slide assembly 52 provides a system design with great flexibility in designing the overall disc drive system such that the weight and size can be reduced and in placement of system components in a more compact manner. Further, the flexibility of carriage slide assembly orientation also can adapt itself to minimize manufacturing and assembly costs associated with the disc drive system itself.

Referring now to Figure 14, an alternate embodiment of carriage slide assembly 52 is illustrated. In particular, the necessity of using guide rods is eliminated since the bearing surface 140 of the roller bearing is machined as a series of recesses, or seats, into the surface of fixed member 54 along its length. Similarly, coextensive recesses, or seats, 142 are machined into the surface of movable part 56 along its length. The roller bearings are positioned for rotation within the seats 140 and 142 as illustrated and thus reduce the friction between the movable and fixed members when the drive force is applied to carriage 57.

Figure 15 is a further embodiment wherein the necessity of using a separate component for fixed member 54 is eliminated, the fixed member now being an integral part of mainframe 50. As shown, the roller bearing seats 160 are machined into the surface of mainframe casting, saving processing time and reducing overall manufacturing costs. In this embodiment, the corresponding seats 162 for the roller bearings are machined into the movable member 56 in a manner similar to that described with reference to Figure 14.

Figures 16 and 17 are set forth to illustrate the hysteresis effect described hereinabove. Ideally, the carriage element always returns to the same position if the same positioning control signal is applied to the motor driving the carriage. Figure 16 includes a reference position 180 to which it is desired to move the carriage in either the direction indicated by reference arrow 182 or the direction indicated by reference arrow 184. Assuming ideal conditions, the carriage would be driven to the reference location 180 each time the proper signal is applied. However, Figure 17 illustrates the actual situation that occurs in prior art disc drive systems. Reference arrow 186 illustrates the initial positioning of the carriage to reference position 180; reference position 187 illustrates, after a period of time, the position taken by the carriage when moved in the direction of arrow 188 for the same signal which moved the carriage to reference position 180; and reference position 189 illustrates, after a period of time, the position of the carriage when moved in the direction of arrow 190. The distance d, or "spread," is caused by the hysteresis effect. The present invention by virtue of using the roller bearing carriage slide assembly described hereinabove substantially reduces the spread effect caused by hysteresis.

The versatility of the novel carriage slide assembly of the present invention provides many advantages over the prior art carriage slide assemblies. In particular, since the slide surface intersection surfaces are in a limited area, space considerations dictated by the prior art use of two spaced-apart steel rods is eliminated, thus allowing reduction in the principal plan dimensions since there is more area available on the mainframe surface to position the remaining components in a more economical and compact manner. The primary advantage of the present invention is that the roller bearings substantially reduce the friction between the bearing services of the fixed and movable members, substantially eliminating the aforementioned hysteresis effect and thus allowing more accurate positioning of the head to the selected circumferential track. Since the carriage slide assembly can be positioned with respect to the mainframe in any one of a plurality of orientations, the system designer has great flexibility in positioning the slide assembly to provide the most compact, efficient, and cost-effective disc drive system. The present invention also provides for the fixed member of the carriage slide assembly to be part of the mainframe, substantially reducing the cost of system design. In contradistinction thereto, the prior art carriage slide assembly guide rods cannot be made part of the mainframe, thus limiting the amount of cost savings which can be attained.

16

While the invention has been described with reference to its preferred embodiments, it will be understood by those skilled in the art that various changes may be made and equivalents may be substituted for elements thereof without departing from the true spirit and scope of the invention. In addition, many modifications may be made to adapt a particular situation or material to the teaching of the invention without departing from its essential teachings.

1. A disc drive system having a mainframe portion and a carriage secured to said mainframe portion which supports at least one magnetic head, the carriage being movable in a principal plane in a manner such that the head is shifted radially relative to a center-driven pliant disc to provide data transfer with selectable tracks on at least one side of the disc, characterised by a carriage slide assembly having a fixed member associated with said mainframe and a movable member coupled to said carriage, said fixed member including a portion for slideably receiving said movable member, and a friction-reducing means interposed between said fixed and movable members within said portion.

2. The drive system of Claim 1, wherein said movable member is coupled to only one surface of said carriage.

3. The drive system of Claim 1, wherein the orientation of said movable member with respect to said carriage is selectable from one of a plurality of orientations, the slide assembly being operable regardless of which orientation is selected.

4. The drive system of Claim 1, wherein said fixed member is formed as part of said mainframe.

5. The drive system of Claim 1, wherein said fixed member comprises a member coupled to said mainframe.

6. The drive system of Claim 1, wherein said friction-reducing means comprises roller bearings.

7. The drive system of Claim 1, wherein two surfaces of both said fixed member and said movable member are separated by roller bearings interposed therebetween.

8. The drive system of Claim 1, wherein said head is shifted by a band actuator driven by a stepper motor.

9. The drive system of Claim 1, wherein said head is shifted by a lead screw driven by a stepper motor.

10. A floppy disc drive system comprising:

a frame member having surfaces for supporting a plurality of components thereon;

a carriage element;

means for receiving and supporting a floppy disc inserted into said frame member;

a transducer mounted in said carriage element, a magnetic head being mounted in said transducer;

means for accessing said carriage element towards selected ones of a plurality of circumferential tracks formed on said floppy disc; and

a single carriage slide assembly for coupling said carriage element to said surface in a manner such that the carriage element is movable in a predetermined direction relative to said surface whereby selected circumferential tracks on said disc can be accessed by said head, said slide assembly comprising a movable member coupled to said carriage element and a fixed member associated with a support surface, said fixed member including a channel-like portion for slideably receiving said movable member, and roller bearings interposed between said fixed and movable members within said portion, the roller bearings providing a tight coupling with a low coefficient of friction between said fixed and movable members.

11. The drive system of Claim 10, wherein said fixed member is formed as part of said mainframe.

12. The drive system of Claim 10, wherein said fixed member comprises a member coupled to said mainframe.

13. The drive system of Claim 10, wherein the orientation of said movable member with respect to said carriage is selectable from one of a plurality of orientations, the slide assembly being operable regardless of which orientation is selected.

14. The drive system of Claim 10, wherein a plurality of roller bearings receiving surfaces are formed in one surface of both said fixed and movable members, the receiving surface in said fixed member being coextensive with the receiving surface in said movable member.

15. The drive system of Claim 14, wherein said receiving surfaces extend along said surfaces for a predetermined length and wherein a plurality of said roller bearings are positioned within said receiving surfaces.

16. The drive system of Claim 10, further including an elongated channel formed in an inner surface of said receiving channel and a coextensive channel formed in the surface of said movable member facing said elongated channel, a plurality of guide rods being positioned between said roller bearings and the inner surfaces of said elongated and coextensive channels, the guide rods associated with said movable member being movable with said member, the guide rods associated with said fixed member being fixed in position.

17. The drive system of Claim 16, further including means for adjusting the contact pressure between said roller bearings and said guide rods whereby the friction between said fixed and movable members can be controlled.

18. The drive system of Claim 17, further including means for maintaining the spacing between said plurality of roller bearings at a constant value.

19. The drive system of Claim 18, wherein said head is accessed by a band actuator driven by a stepper motor.

20. The drive system of Claim 18, wherein said head is accessed by a lead screw driven by a stepper motor.

0117158

1/3

FIG. 1.
PRIOR ART

FIG. 2.
PRIOR ART

FIG.3.

FIG.4.

FIG.5.

FIG.6.

FIG.8.

FIG.7.

FIG.9.

FIG. 10.

128  124  128  56

110

132

110

54

130

126

FIG. 11.

70

66  62

64  72

59

68

57

60

75  56  52  54

FIG. 12.

82

54

104

56

60

FIG. 13.

60

56

104

54

82

FIG. 14.

110  140

142

56  60

128

126

82  54

FIG. 15.

110  160  60

162

56

162

50  126

128

FIG. 16.

182  180

184

FIG. 17.

d  190  189

180

188  186  187

| | DOCUMENTS CONSIDERED TO BE RELEVANT | | EP 84301153.7 |
|---|---|---|---|
| Category | Citation of document with indication, where appropriate, of relevant passages | Relevant to claim | CLASSIFICATION OF THE APPLICATION (Int. Cl. 3) |
| X | <u>GB - A - 1 326 842</u> (INFORMATION MAGNETICS) <br> * Fig. 1-12; claims 1-11 * <br> -- | 1,2-7, 10-12, 16 | G 11 B 21/06 |
| A | <u>US - A - 3 922 720</u> (CALETTI) <br> * Fig. 1-3; claims 1-5 * <br> -- | 1,2-7, 10-12, 16 | |
| A | <u>GB - A - 1 392 398</u> (IBM) <br> * Fig. 1-3; claims 1-8 * <br> -- | 1,2-7, 10-12, 16 | |
| A | <u>GB - A - 2 062 932</u> (MITSUBISHI) <br> * Fig. 1-5; abstract * <br> -- | 1,8,19 | |
| A | <u>US - A - 4 068 268</u> (IDEMOTO) <br> * Fig. 1-11; abstract * <br> ---- | 1,9,20 | TECHNICAL FIELDS SEARCHED (Int. Cl. 3) <br><br> G 11 B 21/00 |

The present search report has been drawn up for all claims

| Place of search | Date of completion of the search | Examiner |
|---|---|---|
| VIENNA | 25-04-1984 | BERGER |